# EUROPEAN PATENT APPLICATION

(11) **EP 1 708 455 A1**
(43) Date of publication of application: **04.10.2006**
(21) Application number: 06006873.1
(22) Date of filing: 31.03.2006
(51) Int. Cl.: H04L 29/06

(54) **Method and system for transmitting information of respondent participating in push-to-talk over cellular network session**

(30) Priority: 01.04.2005 KR 20050027431
(71) Applicant: Samsung Electronics Co., Ltd., Suwon-si, Gyeonggi-Do (KR)
(72) Inventor: Sung, Sang-Kyung, Seocho-gu Seoul (KR); Park, Sung-Jin, Suwon-si Gyeonggi-do (KR); Park, Joon-Goo, Giheung-gu Yongin-si Gyeonggi-do (KR)
(74) Representative: Grünecker, Kinkeldey, Stockmair & Schwanhäusser Anwaltssozietät

(57) **Abstract**

Disclosed is a push-to-talk-over-cellular (PoC) service that transmits information on a group talk in a wireless connection section for operation in a mobile environment with a low traffic burden and higher efficiency. The PoC service transmits a PoC call request message of an originating PoC client to a terminating PoC server, receives a response message to the PoC call request message from a terminating PoC client, and receives a message including information of the terminating PoC client transmitting the response message, from an originating PoC server.

## Description

### BACKGROUND OF THE INVENTION

### 1. Field of the Invention

The present invention relates to push-to-talk-over-cellular (PoC) communication technology capable of transmitting information on a group talk in a wireless connection section, for operation in a mobile environment with a low traffic burden and higher efficiency, and more particularly, to a method and system for transmitting session participation information of PoC users participating in a PoC group session.

### 2. Description of the Related Art

Significant developments in mobile communications technology and the extension of mobile communication networks have resulted in the development of a vast array of services and applications for use with a cellular phone. Concurrently, there is an increasing demand from cellular phone users for additional services, such as a location, multimedia, and push-to-talk (PTT) service. Among these extra services, the PTT service supports various supplementary functions such as instant messenger and a status display, as well as a group call and a voice call, which are also provided by an existing radio or a trunk radio system (TRS).

Standardization of a push-to-talk-over-cellular (PoC) service that utilizes the PTT function in a mobile communication network is currently taking place. One unique feature of the PoC service is that a user can participate in a plurality of PoC sessions and thus can use a call service while moving among the PoC sessions as desired. This feature is a requirement that is specified in the open mobile alliance (OMA), which is a forum for specifying mobile communications services.

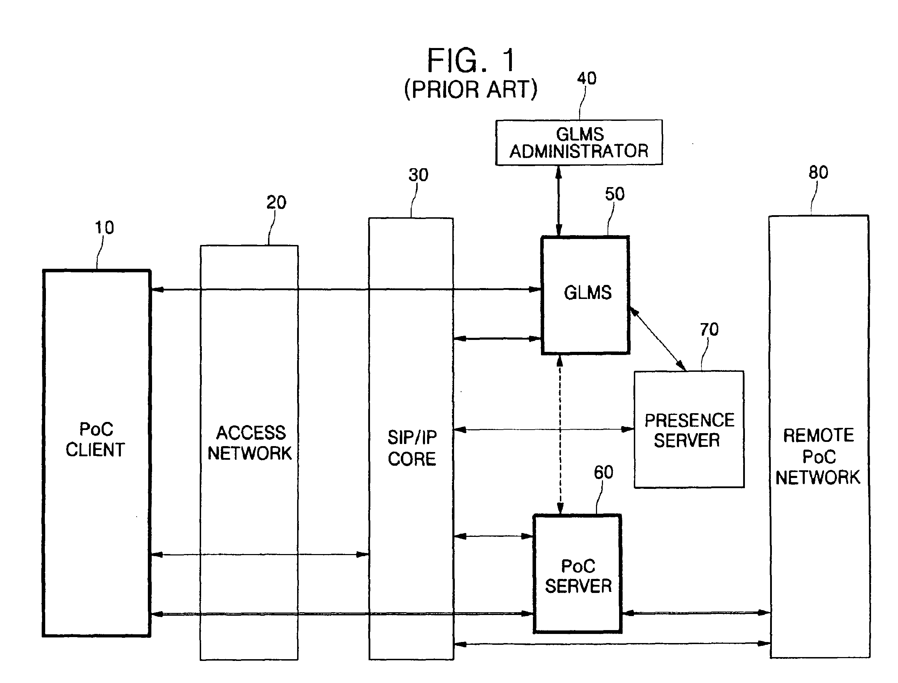

FIG. 1 is a schematic diagram of a conventional PoC service system. Referring to FIG. 1, a PoC client 10, as a service requester installed in a mobile station, is generally connected to a Session Initiation Protocol/Intemet Protocol (SIP/IP) core 30 that supports SIP and IP multimedia via an access network 20.

The PoC client 10 resides in a PoC user terminal to provide access to the PoC service. The PoC client 10 mainly serves to establish, participate in, and terminate a PoC session. In addition, the PoC client 10 makes and transfers a talk burst, supports an instant personal alert, and authenticates when accessing the PoC service. Hereinafter, unless otherwise stated, the PoC client 10 is assumed to be the same as a PoC service subscriber.

The SIP/IP core 30 is connected to a PoC server 60, a Group List and Management System (GLMS) 50, and a presence server 70, in order to support the PoC service. At this time, the PoC server 60 has a Controlling PoC Function for maintaining and managing a PoC session, or a Participating PoC Function for participating in a PoC session for a one-to-one PoC call or a one-to-two or more PoC call.

In general, SIP or Extended SIP, an application-layer protocol for controlling Internet multimedia communication (IP telephony), are mainly used to transmit session participation information of PoC group talks.

Generally, SIP is a standard defined in the Internet Engineering Task Force (IETF) Request for Comments (RFC) 2543. SIP is an application-layer control protocol that is used to set up, modify, and terminate a session or call for multimedia communication such as video and voice communication. SIP exists over a User Datagram Protocol (UDP)/TCP/IP layer, which supports both unicast and multicast sessions for initiating a session by inviting participants to a multimedia conference with a client/server protocol capable of exchanging SIP Request and Response messages in a request/response fashion.

### The SIP Request message provides six functions in RFC 2543 as follows:

INVITE (Invitation to participate in a session);
ACK (Acceptance of an INVITE request);
BYE (Termination of a call), REGISTER (Registration with the database of a redirect server by a user agent);
CANCEL (Cancellation of a pending request); and
OPTIONS.

The SIP Response message provides status codes as follows:
1xx (Information response);
2xx (Successful response);
3xx (Redirection response);
4xx (Client Error, Request Failure);
5xx (Server Error); and
6xx (Global Failure).

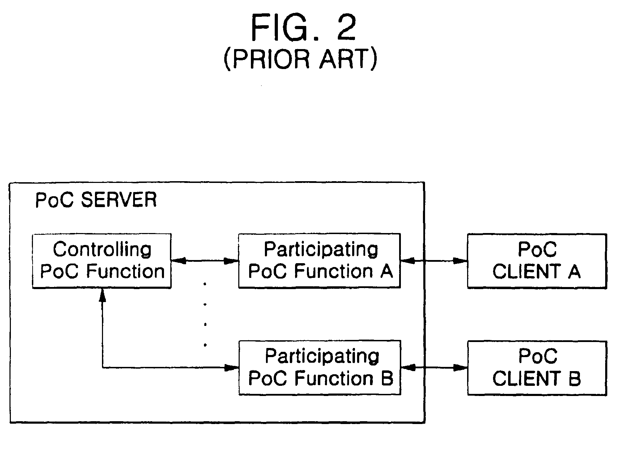

FIG. 2 illustrates a schematic configuration of a conventional PoC server. The PoC server performs both a Controlling PoC Function (hereinafter referred to as CF) for controlling overall maintenance and management of a PoC session and the Participating PoC Function (hereinafter referred to as PF) for controlling maintenance and management between each PoC session, which will be explained below with reference to Tables 1 and 2.

**Table 1**

| Controlling PoC Function (CF) |
|---|
| • Provides centralized PoC session handling |
| • Provides centralized Media distribution |
| • Provides centralized Talk Burst Arbitration functionality including talker identification |
| • Provides SIP session handling, such as SIP session origination, termination, etc. |
| • Provides policy enforcement for participation in group sessions |
| • Provides participant information |
| • Collects and provides centralized media quality information |
| • Provides centralized charging reports |
| • May provide transcoding between different codecs |
| • Supports Talk Burst Control Protocol Negotiation |

As shown in Table 1, the PoC server performing the CF (or the Controlling PoC server) manages a PoC session. In particular, the Controlling PoC server receives requests for the floor from PoC clients, arranges an order in which to give the clients the floor, and gives the clients the floor in that order. The Controlling PoC server also distributes a talk burst, for which an arbitrary PoC client makes a request, to all other PoC clients participating in a group PoC call, and provides information of the PoC clients participating in the group PoC call.

As shown in Table 2 below, the PoC server performing the PF (or the Participating PoC server) manages a PoC session between the Controlling PoC server and each PoC client. In particular, the Participating PoC server relays the floor between the PoC client and the Controlling PoC server when the PoC client makes a request for the floor or when the Controlling PoC server gives the floor to the PoC client. In addition, the Participating PoC server relays media between the Controlling PoC server and the PoC client, performs transcoding between different codecs, and filters one of two concurrent PoC sessions according to the choice of a PoC user when there is simultaneous talking in the two active PoC sessions.

**Table 2**

| Participating PoC Function (PF) |
|---|
| • Provides PoC session handling |
| • May provide the Media relay function between PoC client and Controlling PoC server |
| • May provide user media adaptation procedures |
| • May provide the Talk Burst control message relay function between PoC client and Controlling PoC server |
| • Provides SIP session handling, such as SIP session origination, termination, etc, on behalf of the represented PoC client |
| • Provides policy enforcement for incoming PoC session (e.g. access control, incoming PoC session barring, availability status, etc.) |
| • May collect and provide media quality information |
| • Provides participant charging reports |
| • May provide filtering of media streams in the case of simultaneous sessions |
| • May provide transcoding between different codecs |
| • May support Talk Burst Control Protocol Negotiation |
| • Stores the current Answer Mode and Incoming PoC Session Barring preferences of the PoC client |

In the PoC service system described above, the PoC user can input information on groups and their members into the GLMS 50 through the PoC user's terminal, and can receive information about other PoC users with whom the PoC user can talk through an individual or group list transmitted from the GLMS 50.

Alternatively, in order to create, modify and manage groups and their members, the information on the groups and their members may be input into the GLMS 50 via a communication network, such as an Internet or Intranet.

In order to use the PoC call service, the PoC user registers his/her PoC address with the SIP/IP core 30. The SIP/IP core 30 stores information on the PoC user by request of the PoC user. Thus, when another PoC user tries to request the group PoC call, the PoC user registers his/her information with the SIP/IP core 30 in advance, and requests the group PoC call to his/her SIP/IP core 30 by using group identification information transmitted from the GLMS 50. The SIP/IP core 30 performs addressing and domain locating using information of the requesting PoC user and then transfers a PoC call request to a home PoC server 60 with which the requesting PoC user is registered.

In regard to the PoC call request, the PoC server 60 prepares to establish a PoC session, obtains each user's information from the GLMS 50, and then transfers a PoC call request signal to the SIP/IP core 30. When the PoC call request is made to users within an Intradomain, the PoC server 60 performs both the CF and the PF. The PoC server 60 managing the call-requested PoC user requests the PoC call to the PoC user after locating the SIP/IP core 30 by use of the PoC user's information transmitted to the PoC server 60.

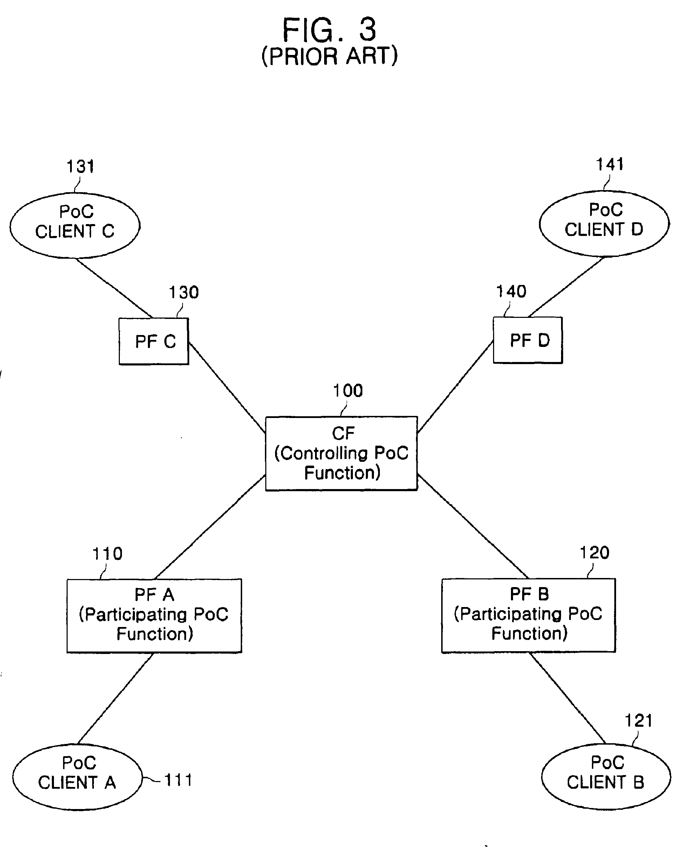

FIG. 3 is a schematic diagram illustrating CF and PF blocks of a PoC server. Referring to FIG. 3, PoC clients 111, 121, 131, and 141 provide access to a CF 100 through PFs 110, 120, 130, and 140, respectively, thereby establishing a PoC session. When the floor is granted to a requester qualified as a talker by the CF 100, speech media of the corresponding PoC client is transmitted to each PoC client. At this time, the PoC user who is granted the floor cannot appropriately speak until he/she confirms information of the participants participating in the PoC group session.

Meanwhile, the PoC system required by the OMA has the following features.

First, the terminating side can set its own answering modes according to the request of a PoC user. The answering modes can be either auto or manual.

If the terminating side is registered in an auto answer mode user list, the terminating side can immediately send an answer to the originating side in a corresponding network in place of the manual answer of a recipient. The automatic answer is sent instead of operating the terminal in the network because the PoC server has a function of storing the answering mode and the corresponding user list according to a request of the terminal to set the answering mode.

The manual answer mode corresponds to when the user is not included in an automatic answer user list, the answer is ambiguous, or the recipient sets all users to make the manual answer. In the manual mode, a PoC call request is transmitted to the user's terminal through a terminating network and then a call is connected by acceptance of the PoC user.

Second, the PoC system is divided into an on-demand session mode and a pre-established (or early) session mode, according to the type of connection with a PoC server within a user's home network. The pre-established session mode is designed so that the PoC user sets a session between a PoC client and a PoC server belonging to a PoC user's home network in advance by PoC user's request. The pre-established session enables the PoC user to negotiate media parameters to be used with the PoC server in advance, and thus advance rapid session establishment without renegotiating the media parameters to be used in the future between the PoC server and client. In order to set the pre-established session, the PoC client provides supported media parameters to a Session Description Protocol Multipurpose Internet Mail Extensions (SDP MIME) body through a SIP INVITE method, and responds to the media parameters provided from the PoC server. The PoC client sends, to the PoC user, identification information of the pre-established session for a response message received from the PoC server, together with a conference Uniform Resource Identifier (URI). When using the pre-established session, it is possible to pre-negotiate parameters such as an IP address, a port number, a codec to be used, and a Talk Burst Control Protocol (TBCP) for controlling a talk burst. The on-demand session mode refers to a state in which the PoC user does not set the pre-established session, and indicates that the PoC user performs a PoC call connecting procedure after receiving an invitation message of another PoC user.

Hereinafter, a process of establishing a PoC session of the PoC system will be described with distinction between the originating side and the terminating side.

First, an originating PoC client A sends an SIP INVITE request message, which includes the SIP address of a recipient to whom the PoC client A desires to talk, to a corresponding SIP/IP core A. The INVITE request message includes information such as a PoC address of the call-requesting client, requested media parameters (because the requested session is based on multimedia having various media attribute values such as an audio and video encoding method, a rate and a payload type), and an attribute value informing PoC service, and is forwarded to a PF via corresponding IP Multimedia Subsystem (IMS) servers (Proxy Call Session Control Function (P-CSCF) and Serving Call Session Control Function (S-CSCF)) in an IMS network through a route query at a Dynamic Host Configuration Protocol (DHCP) server or Domain Name System (DNS) server. Because the PF, to which a PoC user is connected at a general call request, can be implemented as an entity different from a CF that manages the talk burst of an established session, the INVITE request message forwarded previously is transmitted to the CF via an SIP/IP core of the corresponding network.

A PoC session controlling network including the CF transmits the INVITE request message to the terminating network, and then receives a response message. The SIP response message with which the terminating network responds may a provisional response message of 1xx, a successful response message of 2xx, and an error response message of 4xx, 5xx, or 6xx. If an AUTO-ANSWER mode is set, the CF can receive a SIP 183 Session Progress signal, and thus perform connection between the PoC server and the PoC client in the IMS network of the call requester. The call acceptance signal of the recipient responds with the SIP 183 Session Process or SIP 200 OK response and is forwarded to the PoC client A via the CF and PF, the PoC servers. After receiving the 200 OK or 183 Session Progress response from the terminating PoC server, the CF determines that a PoC call is connected and then sends a Floor Granted signal, which gives the talk burst floor to the PoC client A. Granting the talk burst authority according to the response (200 OK or 183 Session Progress) can be divided into confirmed and unconfirmed types. When receiving the unconfirmed response, the CF requires a buffering function.

After receiving the response signal to the INVITE request signal, the originating PoC client A receives the Floor Granted signal forwarding a talk burst transmission enable signal (e.g., a ring back tone) using Real-time Transport Protocol (RTP) Control Protocol (RTCP). At this time, the Floor Granted signal is generated from the CF having the authority to arbitrate the talk burst, and transmitted to the corresponding PoC client via the PF, which manages the corresponding PoC client. The Floor Granted signal can be transmitted without passing through the SIP/IP core because it uses a bearer's route rather than the SIP. Finally, the PoC user who confirms the ring back tone transmits a media stream (e.g. voice) using an RTP.

Conventional art associated with respondent information transmission will be described below.

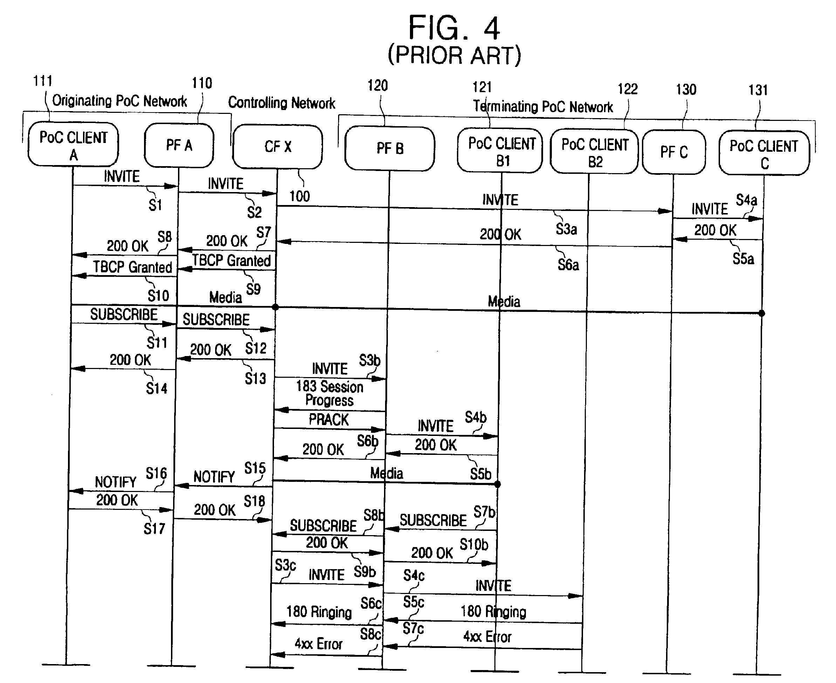

FIG. 4 illustrates a flow of signals for an SIP call processing procedure of a PoC client for receiving continuous information of participants when a conventional group session is connected. A PoC client A requests an on-demand ad-hoc group session from PoC clients B1, B2, and C (since the procedure is performed on a pre-established group session by the same principle, the ad-hoc group session is shown by way of example), and a different response message is received from each client.

Referring to FIG. 4, an originating PoC client A 111 sends an SIP INVITE request message including conference session information (a URI list including address information of terminating PoC clients, a provisioned conference identity) (S1 and S2), and thus the SIP INVITE request message is sent to a corresponding PoC client (S3a and S4a). When a first 200 OK response message is received from a terminating PoC client C 131, the originating PoC client A 111 initiates a PoC media session (S5a, S6a, S7 and S8). The originating PoC client A 111 requests a SIP SUBSCRIBE message from a conference server in order to obtain information on group session participation (S11 and S12). The originating PoC client A 111 extracts a PoC session identity from the previously received 200 OK response (see steps S7 and S8) in order to identify conference information that the originating PoC client A 111 intends to obtain, sets a request URI of the SIP SUBSCRIBE message as the extracted PoC session identity, and includes the "conference" in an event header. Accordingly, the originating PoC client A 111 can request the session information from the corresponding conference server.

Thereafter, a CF operating as an SIP user agent by request of the SIP SUBSCRIBE message draws up a conference state event package whenever an event occurs.

Finally, whenever receiving a session participation message in the future according to the session information obtaining request, the CF X 100 sends a result of the conference state event package including the event by way of an SIP NOTIFY message (S15 and S16). Further, a terminating PoC client B1 121 participating in the session in the future receives the conference state information by the same procedure as the foregoing.

However, the conventional method of obtaining session participant information has the following drawbacks.

First, a session initiator needs to request the SIP message (SIP SUBSCRIBE message) in order to obtain the conference state information. As a result, additional SIP signaling is required.

Second, when the established group session is an ad-hoc group session, the SIP SUBSCRIBE message is requested after the first 200 OK response message to the initial SIP INVITE message is received. (As described above, after the PoC session identity is received through the response of steps S7 and S8, the SIP SUBSCRIBE message can be requested.)

Third, in the case of the PoC client invited to the session, an ACK signal to the received 200 OK response is returned, and then the group information can be requested. In this case, the participant information cannot be obtained in real time when the group is initially established. As a result, there is a possibility of the PoC user not properly transmitting media.

### SUMMARY OF THE INVENTION

It is an object of the present invention to provide a PoC network for a mobile environment with a low traffic burden, by transmitting information of a PoC client responding to session participation in an initial session establishment procedure with the information included in a TBCP signal.

Another object of the present invention is to provide a session initiator with all information created according to a session participation response type.

According to the present invention, there is provided a method for transmitting information of a respondent participating in a push-to-talk-over-cellular (PoC) network session, including transmitting, by an originating PoC server, a PoC call request message of an originating PoC client to a terminating PoC server; receiving, by the originating PoC server, a response message to the PoC call request message from a terminating PoC client; and receiving, by the originating PoC client, a message including information of the terminating PoC client transmitting the response message, from the originating PoC server.

According to the present invention, there is provided a method for transmitting information of a respondent participating in a push-to-talk-over-cellular (PoC) network session, including transmitting, by a PoC server managing the session, a PoC call request message of an originating PoC client to a terminating PoC server, receiving, by the PoC server, a response message to the PoC call request message from a terminating PoC client, and receiving, by the originating PoC client, a message including information of the terminating PoC client transmitting the response message, from the PoC server.

According to the present invention, there is provided a system for transmitting information of a respondent participating in a push-to-talk-over-cellular (PoC) network session, including an originating PoC client for transmitting a session call request message to a terminating PoC system, an originating PoC server for receiving a response message to the call request message, and the originating PoC client for receiving a message including information of a terminating PoC client transmitting the response message from the originating PoC server.

According to the present invention, there is provided a push-to-talk-over-cellular (PoC) system for transmitting information of a respondent participating in a PoC network session, including an originating PoC client for transmitting a session call request message to a terminating PoC system, a PoC server for overall management of the session and receiving a response message to the call request message, and the originating PoC client for receiving a message including information of a terminating PoC client transmitting the response message from the originating PoC server.

According to the present invention, there is provided a push-to-talk-over-cellular (PoC) server for transmitting information of a respondent participating in a PoC network session, wherein, when a response message to a session call request message of an originating PoC client is transmitted to a terminating PoC client, and when the session is connected, the PoC server provides the originating PoC client with a message including information of the terminating PoC client transmitting the response message.

According to the present invention, there is provided a push-to-talk-over-cellular (PoC) client for transmitting information of a respondent participating in a PoC network session, in which the PoC client transmits a call request message to a terminating PoC system, and when a response message to the session call request message is transmitted from a terminating PoC client to an originating PoC server, the PoC client receives a message including session connection information of the terminating PoC client transmitting the response message from the originating PoC server.

According to the present invention, there is provided a push-to-talk-over-cellular (PoC) client for receiving information of a respondent participating in a PoC network session. The PoC client transmits a call request message to a terminating PoC system, and when a response message to the session call request message is transmitted from a terminating PoC client to a PoC server managing the session, the PoC client receives a message including information on session connection of the terminating PoC client transmitting the response message from the PoC server.

### BRIEF DESCRIPTION OF THE DRAWINGS

The above and other objects, features, and advantages of the present invention will be more clearly understood from the following detailed description, taken in conjunction with the accompanying drawings, in which:
FIG. 1 is a schematic diagram of a conventional PoC service system;
FIG. 2 shows a schematic configuration of a conventional PoC server;
FIG. 3 is a schematic diagram illustrating CF and PF blocks of a conventional PoC server;
FIG. 4 illustrates flow of signals for a SIP call processing procedure of a PoC client for receiving continuous information of participants when a conventional group session is connected;
FIG. 5 is a schematic diagram illustrating flow of signals related to the concept of transmitting session participation information through an RTCP message in accordance with the present invention;
FIG. 6 illustrates flow of signals for a process of transmitting session participation information with the session participation information included in a TBCP message in accordance with the present invention;
FIG. 7 illustrates a format of a TBCP message including an RTCP payload in accordance with the present invention; and
FIG. 8 illustrates a table of TBCP response types according to the present invention.

### DETAILED DESCRIPTION OF THE PREFERRED EMBODIMENTS

Hereinafter, preferred embodiments of the present invention will be described in full detail with reference to the accompanying drawings. In the following description, a detailed description of known functions and configurations incorporated herein has been omitted for the sake of clarity and conciseness.

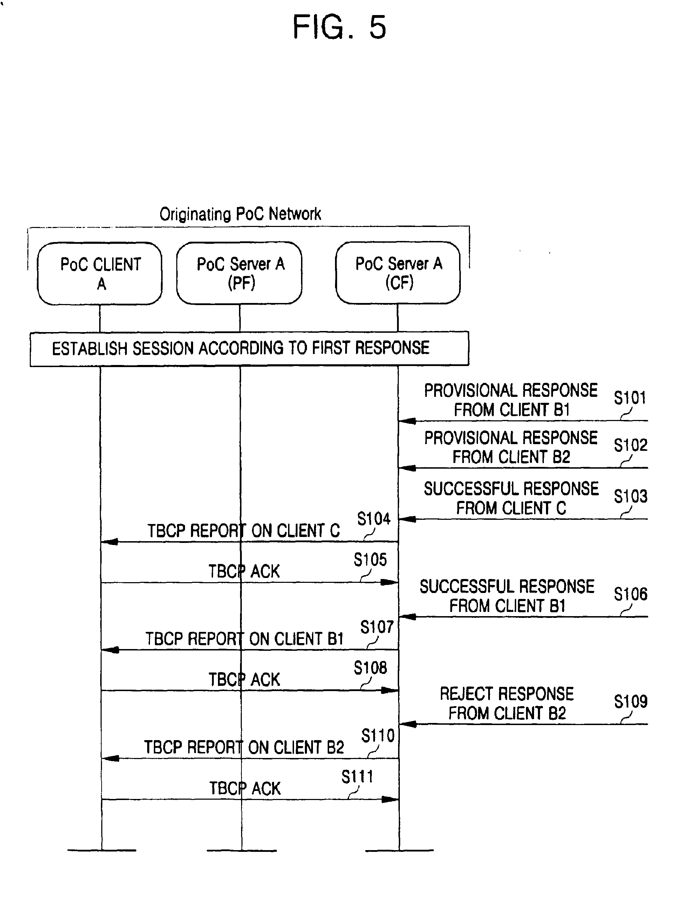

FIG. 5 is a schematic diagram illustrating flow of signals related to the concept of transmitting session participation information through an RTCP message in accordance with the present invention. More specifically, FIG. 5 illustrates a concept in which a PoC client A requesting a group session receives a first 200 OK response to establish the group session, receives an SIP response from another PoC client in the same group, and transmits the resulting RTCP message to the established session.

Referring to FIG. 5, a conference server CF has a basic function of transmitting no RTCP message because a provisional response received from PoC clients B1 and B2 as shown in steps S101 and S102 is not a final response for session participation. (However, the RTCP message may be selectively transmitted depending on the function of the CF.)

When a successful response is received from another PoC client (S103), the CF transmits automatically an identity of the PoC client participating in the session, a type of the response, and a content of the response through a payload of the RTCP message (or a TBCP message according to an OMS PoC policy) (S104). In certain cases, the CF may be able to transmit them intermittently or late. Further, when receiving SIP final responses continuously transmitted from other PoC clients, the CF transmits contents of successful and rejected responses with the contents of successful and rejected responses included in the RTCP payload (S106 through S111).

Although not shown in FIG. 5, the PoC client transmitting the successful response to the session can receive information of participants connected to the session in the future by the same method as the present invention. That is, in FIG. 5, a PoC client C can receive future information on session participation of a PoC client B1. No entity other than a session initiator is necessary to send a provisional or reject response for a session participation request.

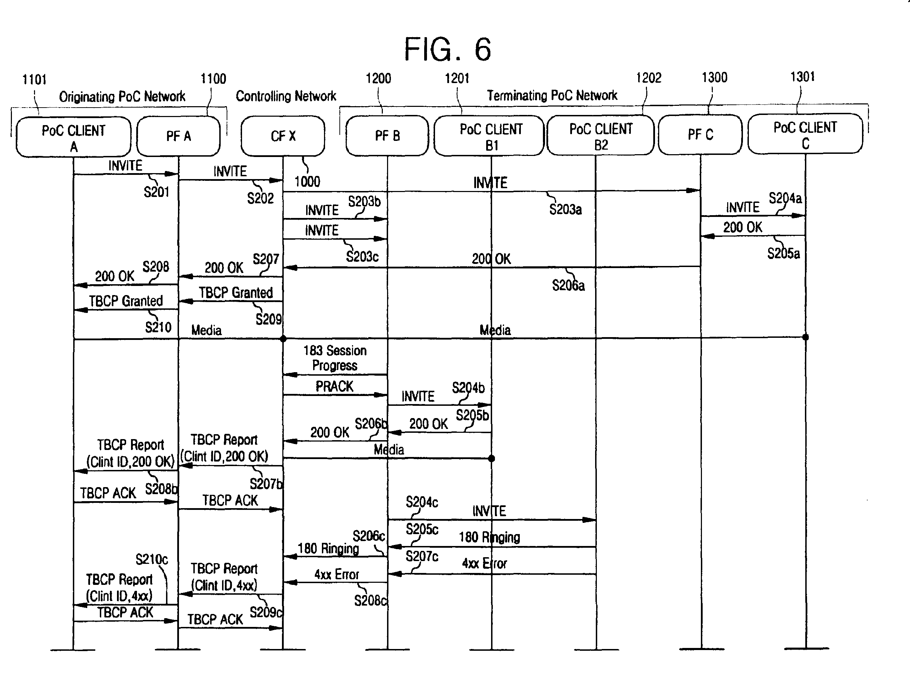

FIG. 6 illustrates a process of a terminating PoC system transmitting a response message to a session connection request message of an originating PoC system, and transmitting a message including information on the terminating PoC system to an originating PoC server and client, in accordance with the present invention. Further, FIG. 6 illustrates a flow of signals for a process of transmitting session participation information of a terminating PoC client transmitting 200 OK with the session participation information included in a TBCP. Here, the originating PoC system includes at least one originating PoC server and an originating PoC client, while the terminating PoC system includes at least one terminating PoC server and at least one terminating PoC client.

An RTCP message defined may be expressed as a "TBCP Report" or "TBCP Inform" message.

The session participation information can be transmitted by creating a `TBCP Report" or "TBCP Inform", or by adding a field proposed in the present invention to an existing TBCP message such as a TBCP Connect message. However, the session participation information includes, but is not limited to, the two types of TBCP messages. Thus, various types of TBCP messages can be used within the present invention. For convenience of description, the session participation information is defined herein as the "TBCP Report."

Referring to FIG. 6, a PoC client A 1101 requesting a group session requests session connection including a URI list of recipients in an SIP INVITE (S201 and S202), and thus a CF X requests session participation from each PoC client (S203a, S203b, S203c, S204a, S204b, and S204c). Next, the CF X receives a response from a PoC client 1301 (S205a, S206a, S207, and S208), and then from each of PoC clients B1 1201 and PoC clients B2 1202 (S205b, S206b, S205c, and S206c).

The PoC client A 1101 establishes a first session with the PoC client C 1301, and then receives the session participation information in response later through the defined TBCP Report message (S209 and S210).

Accordingly, the CF X 1000 acting as a conference server creates and transmits a data payload, which is included in the TBCP message, from a status line of the received SIP response message and an SIP identity of a respondent.

The information transmitted through the TBCP message can include an identity of the PoC client (or a nickname or SIP address information that can be selectively set according to privacy settings) and a successful response (OK) as in steps S207b and S208b.

Further, the information transmitted through the TBCP message can include an identity of the PoC client (or a nickname or SIP address information that can be selectively set according to privacy settings) and an error response (such as 480 Temporarily Unavailable, 486 Busy Here, 488 Not Acceptable Here, 403 Forbidden, etc.) as in steps S209c and S210c.

As described above, in addition, the PoC client invited to the group session can send a 200 OK response or an ACK response to participate in the session, and receives the session participation information (i.e., the PoC client identifier and 200 OK response information) of another PoC client participating in the session later. Thus, the PoC client participating in the session can receive the information of the PoC client participating in the session later without an SIP subscription request of the group information, so that media transmission can be efficiently performed.

The case in which the PoC client A establishes the general PoC group session with three terminating PoC clients is described with reference to FIG. 6. However, the present invention can also be applied to an establishment procedure modified according to a group type of PoC service (such as ad-hoc group, pre-arranged group and chat group), a session type (pre-established session or on-demand session), an answering mode (auto or manual), and response content. For example, with respect to the ad-hoc group session, a PoC server taking the concurrent roles of PF and CF can directly transmit the TBCP message to a PoC client. Further, in FIG. 6, the CF X 1000 acts as an independent server herein, but this configuration is not limited to network topology. More specifically, the CF X can act as the originating PoC server in the originating PoC system by transmitting the TBCP Report to the originating PoC client in step S207b, or as the terminating PoC server in the terminating PoC system by transmitting the TBCP Report including the information of the PoC client transmitting the 200 OK to the terminating PoC client.

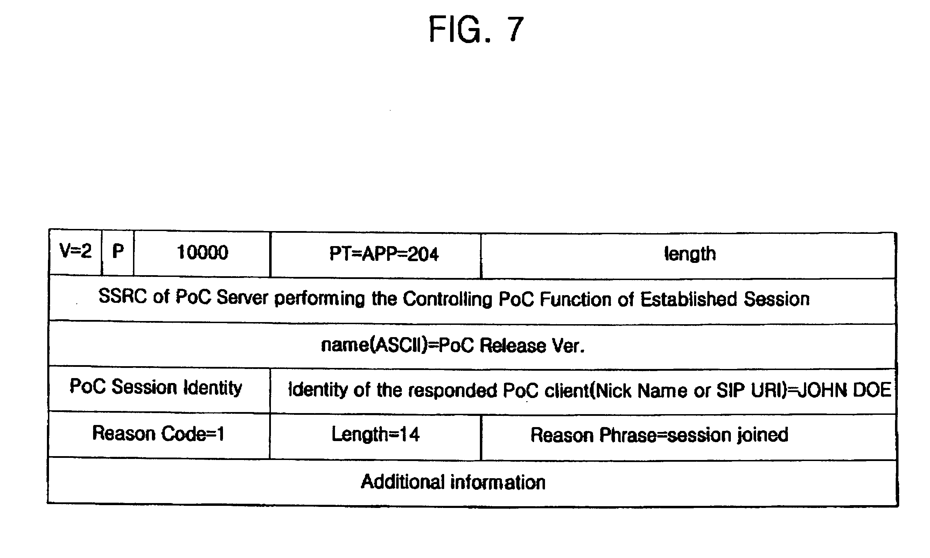

FIG. 7 illustrates a format of a TBCP message including an RTCP payload in accordance with the present invention. Referring to FIG. 7, the RTCP APP packet includes the identity of a respondent, the identity of an established PoC group or session, and the response type and content of a terminating PoC client, together with general RTCP transmission relevant information such as a version, a subtype, a packet type and a packet length.

The subtype information is set to "10000" to indicate an inherent TBCP Report message, or any one selected from the other reserved values.

The conference server includes its own address information for managing a corresponding group session and PoC Release information in a Synchronization Source (SSRC) and name fields, respectively. As information on a final response is received from the PoC client, the conference server transmits an identity and response content of the corresponding PoC client through additional field definition. For example, in FIG. 7, a PoC client "John Doe"[CHANGE K.T. LEE TO "JOHN DOE" IN FIG.7.] sends a successful response (Reason Code=1), which can be expressed and transmitted into a response reason "session joined."

As another example, when the Reason Code is 2, whether an error such as an SIP 4xx response occurs can be indicated, and the present response reason can be expressed in text.

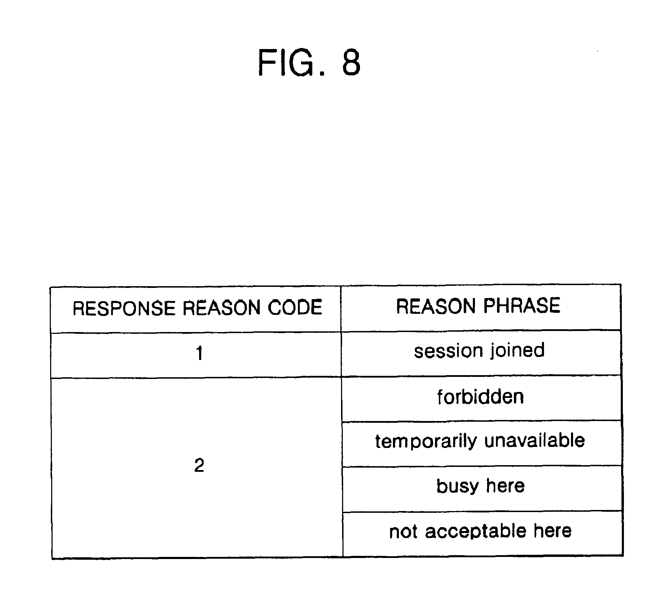

FIG. 8 illustrates a table of TBCP response types of the present invention. Referring to FIG. 8, when the TBCP "Reason Code" is 1 in the TBCP Report message, this indicates successful session connection. Text ("session joined") indicating a content of the present successful session connection is included. When the TBCP "Reason Code" is 2, a session establishment error is indicated, and error content (such as forbidden, unavailable or busy) is transmitted to a session initiator so as to be suitable for each error response situation.

The TBCP message can be modified into such a message as a Multimedia Burst Control Protocol (MBCP) message, in order to express multimedia in the future. According to the present invention, when the SIP session connection response is received after the first response in the PoC group talk, the session connection information of the responding, terminating PoC client is transmitted in the connected session using the TBCP, and traffic burden can be reduced in the wireless environment.

Further, the initiator of the PoC group talk and the PoC user responding to the group talk request first provide the information on the members participating in the group in the future without an additional request of the SIP message. Particularly, the session initiator provides the reject information of a PoC user who does not gain acceptance to participate in the session. Thus, reliability of information provision is improved.

While the present invention has been described with reference to preferred embodiments thereof, it will be understood by those skilled in the art that various changes in from and detail may be made therein without departing from the scope of the present invention as defined by the following claims.

## Claims

1. A method for transmitting information of a respondent participating in a push-to-talk-over-cellular (PoC) network session, the method comprising the steps of:
transmitting, by an originating PoC server to a terminating PoC server, a PoC call request message of an originating PoC client;
receiving, by the originating PoC server from a terminating PoC client, a response message to the PoC call request message; and
receiving, by the originating PoC client from the originating PoC server, a message including information of the terminating PoC client transmitting the response message.

2. The method according to claim 1, wherein the response message to the PoC call request message is a session connection successful response message.

3. The method according to claim 2, wherein the successful response message is a Session Initiation Protocol (SIP) response message of 2xx.

4. The method according to claim 2, wherein, when receiving the successful response message from an arbitrary terminating PoC client, the originating PoC server transmits to the originating PoC client a Talk Burst Control Protocol (TBCP) signal including information of a responding and terminating PoC client.

5. The method according to claim 4, wherein the response message from the form of a payload of a Real-time Transport Control Protocol (RTCP) Application (APP) packet.

6. The method according to claim 5, wherein the RTCP APP packet includes at least one general transmission relevant information field.

7. The method according to claim 6, wherein at least one general transmission relevant information field includes a version field, a subtype field, a packet type field, a packet length field, a respondent identity field, an established PoC group field, a session identity field, a terminating PoC client response type field, and a terminating PoC client response content field.

8. The method according to claim 5, wherein the RTCP APP packet includes a field indicating a respondent identity and indicating a type of response by said respondent.

9. The method according to claim 1, wherein the response message to the PoC call request message is a session connection error response message.

10. The method according to claim 1, wherein, when receiving the response message from the terminating PoC client, the originating PoC server transmits to the originating PoC client a Talk Burst Control Protocol (TBCP) signal including a floor granted signal and information of a responding and terminating PoC client.

11. A method for transmitting information of a respondent participating in a push-to-talk-over-cellular (PoC) network session, the method comprising the steps of:
transmitting, by a PoC server managing the PoC network session to a terminating PoC server, a PoC call request message of an originating PoC client;
receiving, by the PoC server from a terminating PoC client, a response message to the PoC call request message; and
receiving, by the originating PoC client from the PoC server, a message including information of the terminating PoC client transmitting the response message.

12. A push-to-talk-over-cellular (PoC) system for transmitting information of a respondent participating in a PoC network session, the PoC system comprising:
an originating PoC client for transmitting a session call request message to a terminating PoC system; and
an originating PoC server for receiving a response message to the call request message,
wherein the originating PoC client receives a message including information of a terminating PoC client transmitting the response message from the originating PoC server.

13. The PoC system according to claim 12, wherein the response message to the call request message of the originating PoC client comprises a session connection successful response message.

14. The PoC system according to claim 13, wherein the successful response message comprises a Session Initiation Protocol (SIP) response message of 2xx.

15. The PoC system according to claim 13, wherein, when the response message by the terminating PoC client, the originating PoC server transmits to the originating PoC client a Talk Burst Control Protocol (TBCP) signal including information of a responding, terminating PoC client.

16. The PoC system according to claim 15, wherein the TBCP signal is included in a payload of a Real-time Transport Control Protocol (RTCP) Application (APP) packet.

17. The PoC system according to claim 16, wherein the RTCP APP packet comprises at least one general transmission relevant information field.

18. The PoC system according to claim 16, wherein the at least one general transmission relevant information field comprises at least one of:
a version field;
a subtype field;
a packet type field;
a packet length field;
a respondent identity field;
an established PoC group field; a session identity field;
a terminating PoC client response type field; and
a terminating PoC client response content field.

19. The PoC system according to claim 16, wherein the RTCP APP packet comprises a field indicating a respondent identity and indicating a type of response by said respondent

20. The PoC system according to claim 12, wherein the response message to the call request message of the originating PoC client comprises a session connection error response message.

21. The PoC system according to claim 12, wherein, when the response message to the call request message of the originating PoC client is transmitted to the terminating PoC client, the originating PoC server transmits to the originating PoC client a Talk Burst Control Protocol (TBCP) signal including a floor granted signal together with information of a responding, terminating PoC client.

22. A push-to-talk-over-cellular (PoC) system for transmitting information of a respondent participating in a PoC network session, the PoC system comprising:
an originating PoC client for transmitting a session call request message to a terminating PoC system; and
a PoC server for managing the session and receiving a response message to the call request message,
wherein the originating PoC client receives a message including information of a terminating PoC client transmitting the response message from the originating PoC server.

23. A push-to-talk-over-cellular (PoC) server for transmitting information of a respondent participating in a PoC network session, wherein, when a response message to a session call request message of an originating PoC client is transmitted to a terminating PoC client, and when the session is connected, the PoC server provides the originating PoC client with a message including information of the terminating PoC client transmitting the response message.

24. The PoC server according to claim 23, wherein the response message to the call request message of the originating PoC client comprises a session connection error response message.

25. The PoC server according to claim 24, wherein the successful response message comprises a Session Initiation Protocol (SIP) response message of 2xx.

26. The PoC server according to claim 24, wherein, when receiving the session connection successful response message by the terminating PoC client, the PoC server transmits to the originating PoC client a Talk Burst Control Protocol (TBCP) signal including information of a responding, terminating PoC client.

27. The PoC server according to claim 26, wherein the TBCP signal is included in a payload of a Real-time Transport Control Protocol (RTCP) Application (APP) packet.

28. The PoC server according to claim 27, wherein the RTCP APP packet comprises at least one general transmission relevant information field.

29. The PoC server according to claim 28, wherein the at least one general transmission relevant information field comprises at least one of:
a version field;
a subtype field;
a packet type field;
a packet length field;
a respondent identity field;
an established PoC group;
a session identity field;
a terminating PoC client response type field; and
a terminating PoC client response content field.

30. The PoC system according to claim 27, wherein the RTCP APP packet comprises a field indicating a respondent identity and indicating a type of response by said respondent.

31. The PoC server according to claim 23, wherein the response message to the call request message of the originating PoC client comprises a session connection error response message.

32. The PoC server according to claim 23, wherein, when the response message to the call request message of the originating PoC client is transmitted to the terminating PoC client, the PoC server transmits to the originating PoC client a Talk Burst Control Protocol (TBCP) signal including a floor granted signal and information of a responding, terminating PoC client.

33. A method for a push-to-talk-over-cellular (PoC) client to transmit information of a respondent participating in a PoC network session, the method comprising the steps of:
transmitting a call request message to a terminating PoC system; and
when a response message to the session call request message is transmitted from a terminating PoC client to an originating PoC server, receiving from the originating PoC server a message including session connection information of the terminating PoC client transmitting the response message.

34. The method according to claim 33, wherein the response message to the call request message includes a session connection successful response message.

35. The method according to claim 34, wherein the successful response message includes a Session Initiation Protocol (SIP) response message of 2xx.

36. The method according to claim 34, wherein, when receiving the session connection successful response message from the terminating PoC client, the PoC client transmits to the originating PoC server a Talk Burst Control Protocol (TBCP) signal including information of a responding, terminating PoC client.

37. The method according to claim 36, wherein the TBCP signal is included in a payload of a Real-time Transport Control Protocol (RTCP) Application (APP) packet.

38. The method according to claim 37, wherein the RTCP APP packet includes at least one general transmission relevant information field.

39. The method according to claim 38, wherein the at least one general transmission relevant information field includes at least one of a version field, a subtype field, a packet type field, a packet length field, a respondent identity field, an established PoC group field, a session identity field, a terminating PoC client response type field, and a terminating PoC client response type field.

40. The method according to claim 37, wherein the RTCP APP packet includes a field indicating a respondent identity and indicating a type of response by said respondent.

41. The method according to claim 33, wherein, when the response message to the call request message is transmitted to the terminating PoC client, the PoC client receives from the originating PoC server a Talk Burst Control Protocol (TBCP) signal including a floor granted signal and information of a responding, terminating PoC client.

42. The method according to claim 33, wherein the response message to the call request message includes a session connection error response message.

43. A method for a push-to-talk-over-cellular (PoC) client to receive information of a respondent participating in a PoC network session, the method comprising the steps of:
transmitting a call request message to a terminating PoC system; and
when a response message to the session call request message is transmitted from a terminating PoC client to a PoC server managing the session, receiving from the PoC server a message including information on session connection of the terminating PoC client transmitting the response message.
